# EUROPÄISCHE PATENTSCHRIFT

(11) **EP 0 584 496 B1**
(45) Veröffentlichungstag und Bekanntmachung des Hinweises auf die Patenterteilung: **04.10.1995**
(21) Anmeldenummer: 93110646.2
(22) Anmeldetag: 03.07.1993
(51) Int. Cl.: B60J 7/043, B60J 7/047, B60J 7/02, B60R 9/05

(54) **Fahrzeugdach**
Vehicle roof
Toit de voiture

(30) Priorität: 19.08.1992 DE 4227402
(43) Veröffentlichungstag der Anmeldung: 02.03.1994
(73) Patentinhaber: WEBASTO KAROSSERIESYSTEME GmbH, D-82131 Stockdorf (DE)
(72) Erfinder: Reihl, Peter, D-82319 Starnberg (DE); Reinsch, Burkhard, D-82061 Neuried (DE)
(74) Vertreter: Wiese, Gerhard

(56) Entgegenhaltungen:
- DE-A- 3 816 977
- DE-C- 4 142 265
- FR-A- 2 384 640
- PATENT ABSTRACTS OF JAPAN vol. 015, no. 186 (M-1112)14. Mai 1991 & JP-A-03 045 426 (FUJI HEAVY IND. L.T.D.)

## Beschreibung

Die Erfindung betrifft ein Fahrzeugdach mit mindestens einem Deckelteil, das zwischen einer Schließstellung, in der das Deckelteil eine Dachöffnung verschließt und mit der Kontur der festen Dachhaut mindestens näherungsweise bündig liegt, und einer Öffnungsstellung verstellbar ist, in welcher zumindestens ein Teil der Deckelteile durch Verschwenken um eine nahe ihrer Vorderkante liegende Schwenkachse in eine schräg nach hinten ansteigende Stellung gebracht und mit Bezug auf die Schließstellung nach hinten verschoben ist gemäß dem Oberbegriff des Patentanspruchs 1 (Fahrzeugdach, das jenem nach der DE-A-4 123 229 gattungsgemäß ausgebildet ist).

Fahrzeugdächer dieser Art sind unter den Begriffen Spoilerdach, Mehrdeckelspoilerdach oder Lamellendach bekannt. Sie kommen in verschiedenen Ausführungsformen vor (siehe beispielsweise DE-A-34 08 056, DE-A-35 23 882 C, DE-A-37 15 268 C und DE-A-41 23 229). Gemeinsam ist den bisher bekannten Spoilerdächern, daß der in die Öffnungsstellung gebrachte Deckel bei höheren Fahrgeschwindigkeiten zum Schwingen neigt und dadurch häufig störende Geräusche verursacht. Ein anderer Nachteil der bekannten Spoilerdächer besteht darin, daß ein relativ großer Teil der Dachöffnung verschlossen bleibt, da die Anlenkung und Führung des nach hinten hochstehenden Deckels im Bereich der Dachöffnung sicher gewährleistet sein muß. Bei Lamellendächern ist aus den gleichen Gründen zur Gewährleistung einer sicheren Abstutzung jeder Lamelle in deren vorderem Bereich nur eine insgesamt sehr begrenzte Lamellenbreite realisierbar.

Der im Anspruch 1 angegebenen Erfindung liegt die Aufgabe zugrunde, ein Fahrzeugdach der oben genannten Art zu schaffen, dessen Dachöffnung bei sehr einfachem Aufbau in Öffnungsstellung des Deckels bzw. der Deckelteile nur noch sehr wenig durch dieselben abgedeckt ist und das eine besonders wirkungsvolle Führung der Deckelteile auch im Öffnungszustand gewährleistet und damit wenig Nebengeräusche verursacht.

Diese Aufgabe wird bei einem Fahrzeugdach der eingangs genannten Art erfindungsgemäß durch die Merkmale im kennzeichnenden Teil des Patentanspruchs gelöst. Dadurch, daß das wenigstens eine aus der Schließstellung nach hinten geschobene Deckelteil im Bereich seines hinteren Endes an einer Dachreling geführt ist, wobei in oder an der Dachreling zumindest eine Führungskulisse für die Führung von hinteren Führungselementen der Deckelteile angeordnet ist, wird erreicht, daß die Deckelteile über ihren gesamten Verstellbereich hinweg sowohl vorne als auch hinten zwangsgeführt sind. Die Führungselemente sind zweckmäßig als seitlich über die Deckelteile hinausstgehende Führungsstifte ausgebildet. Aus der DE-A-37 39 127 ist eine Dachluke eines Lastkraftwagens bekannt, die zum Öffnen an vertikalen Führungen einer Dachreling geführt, angehoben und anschließend in horizontalen Führungen quer zur Fahrtrichtung verschiebbar ist. Eine Ausstellposition der Deckelhinterkante ist mittels der dort gezeigten Mechanik ebensowenig realisierbar wie eine Verschiebung in geneigter Position. Ein Fahrzeugdach mit einer ähnlichen Öffnungscharakteristik ist aus der JP-A-3-45426 bekannt. Die Verwendbarkeit ist daher auf langsam fahrende Fahrzeuge beschränkt. Vorteilhafte Weiterbildungen der Erfindung sind Gegenstand der Unteransprüche.

Vorteilhaft sind die Deckelteile im Bereich ihres vorderen Endes über vordere Führungselemente an einer tiefer als der Seitenrand der Dachöffnung liegenden Innenlängsführung, die mindestens näherungsweise parallel zu dem die Dachöffnung seitlich begrenzenden Teil der festen Dachhaut verläuft, derart geführt, daß in der Schließstellung des Deckels auch dessen hintere Führungselemente mit der Innenlängsführung in Eingriff stehen. Hierdurch ist eine in Schließstellung bündige Lage der. Deckelteile mit der Oberfläche des umgebenden festen Daches möglich. Die Dichtung zum Innenraum erfolgt dabei zweckmäßig unterhalb der Innenlängsführung.

Die Führungskulisse der Dachreling mündet vorzugsweise in die Innenlängsführung an einer Stelle ein, die sich an oder kurz hinter der Stelle befindet, an welcher die hinteren Führungselemente der Deckelteile in der Deckelschließstellung stehen.

Die Dachreling kann vorteilhaft mindestens in dem Bereich ihrer Längsabmessung, in dem die Deckelteile in der Öffnungsstellung stehen, vertikal verlaufende Seitenwände zur seitlichen Verblendung der in Öffnungsstellung befindlichen Deckelteile aufweisen, wobei die Spalte zwischen den Seitenwänden der Dachreling und den Seitenkanten der Deckelteile zweckmäßig durch Randspaltdichtungen abgedichtet sind.

Bei dem erfindungsgemäßen Dach wird der beim Öffnen oder teilweisen Öffnen über das Dach ausgestellte Bereich der Deckelteile entlang der Dachreling verstellbar geführt. Hierfür sind an oder nahe der Hinterkante der Deckelteile Führungselemente angeordnet, die in Führungen eingreifen, die in der Dachreling integriert sind. Die Führungselemente können z.B. als Stifte und die Führungen als Nuten ausgebildet sein. Es lassen sich jedoch alle für derartige Führungszwecke üblicherweise verwendeten Führungsanordnungen verwenden. Die vorzugsweise vorgesehenen seitlichen Verblendungen der Dachreling sorgen nicht nur für ein gefälliges Aussehen, sondern bewirken auch eine weitere Reduzierung der Windgeräusche. Die Seitenwände zur Verblendung können einstückig an der Reling ausgebildet sein oder auch nachträglich in die Dachreling eingesetzt werden.

Durch das Anlenken des Deckels an der Dachreling wird die Stabilität des Deckels beziehungsweise der Deckelteile wesentlich erhöht. Dabei ist zu berücksichtigen, daß bisher ein derartiges Deckelteil nur in dem Bereich geführt war, der in der Öffnungsstellung des Deckels nach wie vor die Dachöffnung überdeckte. Dieser Bereich entsprach bei Spoilerdächern etwa 35 % der Längsabmessung der Dachöffnung. Während der Deckel somit über ungefähr ein Drittel seiner Länge geführt war, standen zwei Drittel seiner Länge nach hinten über das Dach hinaus, wodurch auf die Führungen im vorderen Drittel erhebliche Biege- und Wechselbeanspruchungen insbesondere bei höherer Fahrgeschwindigkeit einwirkten. Durch die erfindungsgemäße Lösung ist es dagegen möglich geworden, den Deckel beziehungsweise die Deckelteile über praktisch ihre gesamte Länge zu führen, wobei es auch nicht mehr notwendig ist, daß der Deckel in seiner Öffnungsstellung einen größeren Teil der Dachöffnung überdeckt, da nur noch die Vorderkante des Deckels im Bereich der Dachöffnung geführt sein muß.

Ausführungsbeispiele der Erfindung werden nachfolgend anhand der schematischen Zeichnungen beschrieben. Es zeigt
- Fig 1: eine perspektivische Ansicht eines Fahrzeugdachs mit einer Dachreling und einem in Öffnungsstellung befindlichen spoilerartigen Deckel,
- Fig 2: eine perspektivische Ansicht eines Fahrzeugdachs mit einer Dachreling und einem in Öffnungsstellung befindlichen Lamellendach mit mehreren Deckelteilen,
- Fig 3: eine vergößerte Detaildarstellung einer Dachreling entsprechend des Ausschnitts in Fig. 2.

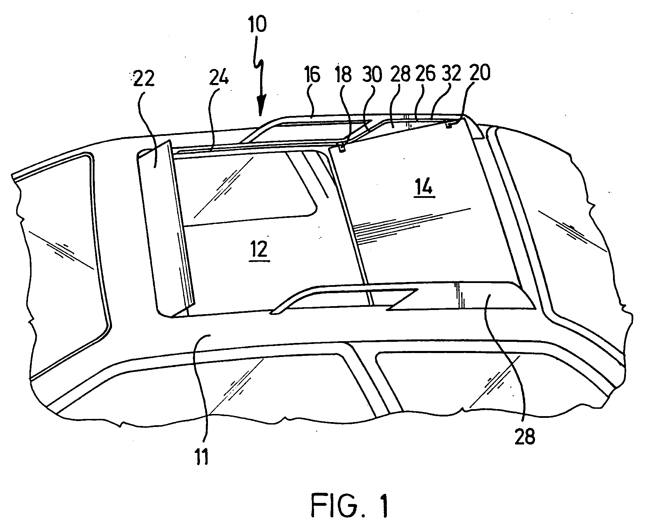

Das in Fig.1 insgesamt mit 10 bezeichnete Fahrzeugdach weist eine in einer festen Dachhaut 11 ausgebildete Dachöffnung 12 auf, die mittels eines ausstellbaren und im ausgestellten Zustand über der festen Dachhaut 11 zurückschiebbaren einzigen Deckelteils (Deckels 14) wahlweise verschlossen oder mindestens teilweise freigelegt werden kann.

Das Fahrzeugdach 10 ist ferner mit einer Dachreling 16 versehen, die zu beiden Seiten der Dachöffnung 12 angeordnet ist und sich von dieser nach hinten erstreckt. An dem Deckel 14 sind im Bereich der Vorder- und Rückkante seitliche Führungselemente 18 und 20, zum Beispiel in Form von Führungsstiften, angeordnet, die zur Führung des Deckels 14 zwischen einer die Dachöffnung verschließenden Schließstellung und der dargestellten, die Dachöffnung 12 praktisch völlig freigebenden Öffnungsstellung dienen. Im Bereich der Vorderkante der Dachöffnung 12 ist ein Windabweiser 22 angeordnet, der in Öffnungsstellung des Deckels 14 selbsttätig nach oben hinausklappt.

In den Seiten der Dachöffnung 12 sind tiefer als der Seitenrand der Dachöffnung liegende Innenlängsführungen 24 angeordnet, in die die seitlich über den Deckel 14 hinausragenden vorderen Führungselemente 18 und in der Deckelschließstellung auch die hinteren Führungselemente 20 eingreifen. Eine nicht gezeigte umlaufende Dichtung einer unterhalb des festen Daches den Rand der Dachöffnung 12 untergreifenden Wasserrinne liegt unterhalb der Innenlängsführungen 24. Die Innenlängsführungen 24 sorgen für die Führung des Deckels 14 im Bereich seiner Vorderkante über den gesamten Verstellbereich hinweg. Die Innenlängsführung 24 geht in eine an der Innenseite der Dachreling 16 angeordnete Führungskulisse 26 über, in welche die hinteren Führungselemente 20 des Deckels 14 eintreten, wenn der Deckel seine Schließstellung verläßt. Die Führungskulisse 26 weist vorne einen schräg nach hinten ansteigenden Abschnitt 30 und einen daran nach hinten anschließenden Abschnitt 32 auf, der in Abstand oberhalb der festen Dachhaut und im wesentlichen parallel zu dieser verläuft. Über die Führungselemente 18, 20 ist der Schiebedachdeckel 14 zwischen der die Dachöffnung 12 verschließenden Schließstellung und der abgebildeten Öffnungsstellung sowohl vorne als auch hinten sicher geführt. Die Verstellmechanik kann besonders einfach und stabil ausgeführt werden, da Ausstellhebel und dergleichen Bauteile entfallen. Im Bereich der Führungskulissen 26 ist die Dachreling 16 durch Seitenwände 28 verblendet. Hierdurch wird die Erzeugung von Windgeräuschen an den Seitenkanten des Schiebedachdeckels 14 vermindert. Der Bereich zwischen den Seitenwänden 28 und den Seitenkanten des Deckels 14 kann durch nicht näher dargestellte Dichtungen abgedichtet werden. Die Dichtung kann dabei sowohl am Deckel 14 als auch an der Dachreling 16 montiert sein.

Beim anfänglichen Zurückschieben des Deckels 14 aus der Schließstellung treten die hinteren Führungselemente 20 in den schräg nach hinten ansteigenden Abschnitt 30 der Führungskulissen 26 über und wandern entlang den Abschnitten 30 nach oben. Dadurch wird der Deckel um eine von den vorderen Führungselementen 18 bestimmte Schwenkachse verschwenkt und mit seiner Hinterkante spoilerartig über die feste Dachhaut 11 ausgestellt. Nachdem die hinteren Führungselemente 20 in die Parallelabschnitte 32 der Führungskulissen 26 eingelaufen sind, wird der Deckel 14 beim weiteren Zurückschieben in der erreichten Schräglage nur noch translatorisch verstellt.

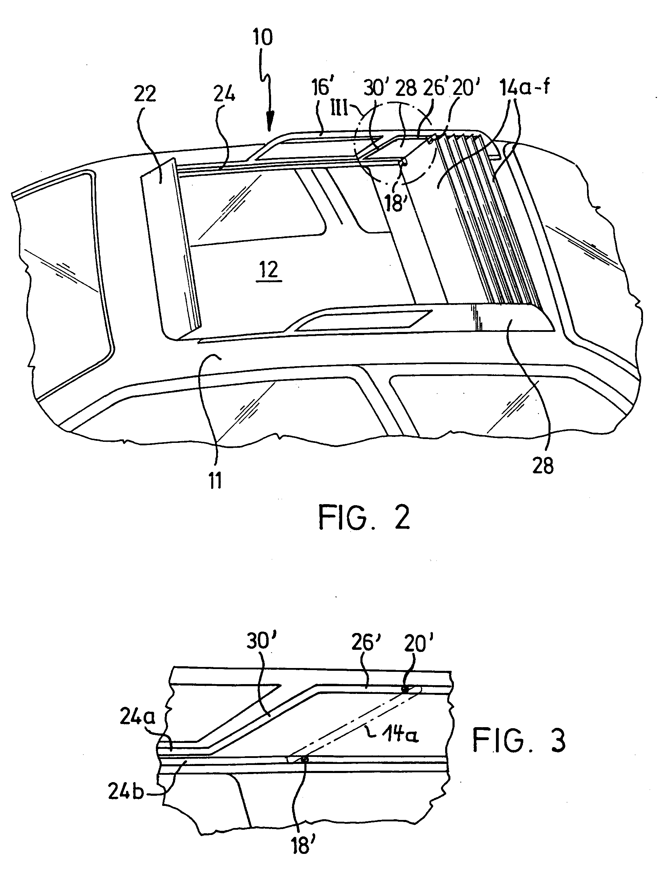

In den Fig. 2 und 3 ist ein Lamellendach gezeigt, wobei gleiche Teile mit gleichen Bezugszahlen versehen sind, die bei Modifizierung mit einem Hochkomma ' versehen wurden. Beim diesem Ausführungsbeispiel mit einem aus sechs Dachteilen (Lamellen 14 a - f) gebildeten Lamellendach sind die Längsführungen 24a und 24b zur Führung von an jeder Lamelle 14 a - f vorgesehenen hinteren Führungselementen 20' beziehungsweise vorderen Führungselementen 18' vollständig in einer oberhalb der festen Dachhaut 11' angeordneten Dachreling 16' integriert. Die obere Längsführung 24 a dient zur Führung der hinteren Führungselemente 20'. Sie geht an einem sich im Bereich des hinteren Randes der Dachöffnung 12 erhebenden Stützsteges der Reling 16' in eine Führungskulisse 26' über, die sich aus einem schräg nach hinten ansteigenden Abschnitt 30' und einem daran nach hinten anschließenden, im oberen Steg der Reling 16' im wesentlichen parallel zur festen Dachhaut 11 verlaufenden Abschnitt zusammensetzt.

Unterhalb der oberen Längsführung 24 a verläuft in geringem Abstand zu dieser eine untere Längsführung 24 b, die die vorderen Führungselemente 18' jeder Lamelle führt.

Dadurch, daß jede Lamelle 14 a - f sowohl an ihrem vorderen Ende durch ein Führungselement 18' als auch an ihrem hinteren Ende durch ein Führungselement 20' geführt ist, ergibt sich in jeder Lage der Lamellen 14 a - f eine sichere Abstützung derselben, so daß die Breite einer Lamelle leicht das Doppelte der bisher realisierbaren Breite erreicht. Eine den Rand der Dachöffnung 12 untergreifende Wasserrinne mit aufgesteckter Dichtung ist auch bei diesem Ausführungsbeispiel unterhalb der Längsführungen 24 a, 24 b vorgesehen, jedoch aus Vereinfachungsgründen nicht dargestellt.

Die vorliegende Erfindung ist im Zusammenhang mit allen Arten von öffnungsfähigen Fahrzeugdächern anwendbar, die über wenigstens ein im geöffneten Zustand über die feste Dachhaut ragendes Deckelteil verfügen und zu dessen Führung zumindestens teilweise eine Fahrzeugreling verwenden. Die seitlichen Langsführungen können zumindestens teilweise unterhalb der festen Dachhaut verlaufen, wobei eine nicht dargestellte Variante auch Längsführungen für vordere Führungselemente unterhalb und für hintere Führungselemente oberhalb der festen Dachhaut aufweisen kann.

## Patentansprüche

1. Fahrzeugdach mit mindestens einem Deckelteil, das zwischen einer Schließstellung, in der das Deckelteil eine Dachöffnung verschließt und mit der Kontur der festen Dachhaut mindestens näherungsweise bündig liegt, und einer Öffnungsstellung verstellbar ist, in welcher das Deckelteil durch Verschwenken um eine nahe seiner Vorderkante liegende Schwenkachse in eine schräg nach hinten ansteigende Stellung gebracht und mit Bezug auf die Schließstellung nach hinten verschoben ist, wobei das Deckelteil (14; 14 a-f) im Bereich seines vorderen Endes über vordere Führungselemente (18; 18') an je einer Längsführung (24; 24 b) geführt ist, die mindestens näherungsweise parallel zu dem die Dachöffnung (12) seitlich begrenzenden Teil der festen Dachhaut (11) verläuft, dadurch gekennzeichnet, daß das aus der Schließstellung nach hinten geschobene Deckelteil (14; 14a - f) im Bereich seines hinteren Endes an einer Dachreling (16; 16') geführt ist, an der zumindest eine Führungskulisse (26; 26') für die Führung von hinteren Führungselementen (20; 20') der Deckelteile (14; 14 a - f) angeordnet ist, wobei das Deckelteil (14; 14a - f) während der gesamten Verschiebebewegung durch die vorderen Führungselemente (18; 18') an unterhalb der festen Dachhaut (11) verlaufenden Längsführungen (24, 24 a) geführt ist.

2. Fahrzeugdach nach Anspruch 1, **dadurch gekennzeichnet**, daß die Führungselemente als seitlich über das Deckelteil (14; 14 a - f) hinausstehende Führungsstifte (20; 20') ausgebildet sind.

3. Fahrzeugdach nach Anspruch 1 oder 2, **dadurch gekennzeichnet**, daß in der Schließstellung des Deckels (14) auch dessen hintere Führungselemente (20) mit der Längsführung (24) in Eingriff stehen.

4. Fahrzeugdach nach einem der vorhergehenden Ansprüche, **dadurch gekennzeichnet**, daß vordere Führungselemente (18') und hintere Führungselemente (20') wenigstens abschnittsweise in zwei getrennten Längsführungen (24 a, 24 b) geführt sind.

5. Fahrzeugdach nach einem der vorhergehenden Ansprüche , **dadurch gekennzeichnet**, daß die Führungskulisse (26; 26') der Dachreling (16; 16') in die Längsführung (24; 24 a) an einer Stelle einmündet, die sich an oder kurz hinter der Stelle befindet, an welcher die hinteren Führungselemente des hintersten Deckelteils (14; 14 f) in der Deckelschließstellung stehen.

6. Fahrzeugdach nach einem der vorhergehenden Ansprüche, **dadurch gekennzeichnet**, daß die Dachreling (16; 16') mindestens in dem Bereich ihrer Längsabmessung, in dem das/die Deckelteil(e) (14; 14 a - f) in der Öffnungsstellung steht, vertikal verlaufende Seitenwände (28) zur seitlichen Verblendung der in Öffnungsstellung befindlichen Deckelteile (14; 14 a - f) aufweist.

7. Fahrzeugdach nach Anspruch 6, **dadurch gekennzeichnet**, daß die Spalte zwischen den Seitenwänden (28) der Dachreling (16; 16') und den Seiterkanten der Deckelteile (14; 14 a-f) durch Randspaltdichtungen abgedichtet sind.

## Claims

1. A vehicle roof with at least one cover part which can be adjusted between a closed position, in which the cover part occludes a roof opening and is at least approximately flush with the contours of the fixed roof skin, and an open position in which, by pivoting about a pivot axis disposed close to its leading edge, the cover part can be brought into an obliquely rearwardly rising position and is displaced rearwardly in respect of the closed position, the cover part (14; 14 a-f) being in the region of its leading end guided by front guide elements (18; 18') on respective longitudinal guides (24, 24b) extending at least approximately parallel with that part of the fixed roof skin (11) which laterally bounds the roof opening (12), characterised in that the cover part (14; 14 a-f) which is pushed rearwardly out of the closed position is, in the region of its rear end, guided on a roof rail (16; 16') on which there is at least one guide member (26; 26') for guiding rear guide elements (20; 20') of the cover parts (14; 14 a-f), whereby the cover part (14; 14 a-f) is guided throughout the entire displacement movement by the front guide elements (18; 18') on longitudinal guides (24, 24a) extending below the fixed roof skin (11).

2. A vehicle roof according to Claim 1, characterised in that the guide elements are constructed as guide pegs (20, 20') which project laterally beyond the cover part (14; 14 a-f).

3. A vehicle roof according to Claim 1 or 2, characterised in that in the closed position of the cover, its rear guide elements (20) also engage the longitudinal guide (24).

4. A vehicle roof according to one of the preceding Claims, characterised in that the front guide elements (18') and rear guide elements (20') are guided over at least portions of two separate longitudinal guides (24a, 24b).

5. A vehicle roof according to one of the preceding Claims, characterised in that the guide members (26, 26') of the roof rails (16, 16') emerge into the longitudinal guide (24, 24a) at a location which is disposed at or shortly behind the location at which the rear guide elements of the rearmost cover part (14, 14f) are in the closed position of the cover.

6. A vehicle roof according to one of the preceding Claims, characterised in that, at least in that part of its length in which the cover part(s) (14; 14 a-f) is/are in the open position, the roof rail (16, 16') comprises vertically extending side walls (28) for laterally facing the cover parts (14; 14 a-f) which are in the open position.

7. A vehicle roof according to Claim 6, characterised in that the gaps between the side walls (28) of the roof rails (16, 16') and the lateral edges of the cover parts (14; 14 a-f) are sealed by gaskets over the edge of the gap.

## Revendications

1. Couvercle de véhicule comportant au moins une partie de couvercle réglable entre une position de fermeture pour laquelle la partie de couvercle ferme une ouverture de couvercle en étant pratiquement au moins à fleur avec le contour de l'enveloppe rigide du couvercle et une position d'ouverture pour laquelle, par basculement autour d'un axe de basculement situé à proximité de son arête avant, la partie de couvercle est mise dans une position inclinée montante vers l'arrière pour être coulissée vers l'arrière par rapport à la position de fermeture, la partie de couvercle (14 ; 14a-f) étant guidée au niveau de son extrémité avant par des éléments de guidage avant (18 ; 18') dans chaque fois un guide longitudinal (24 ; 24b) qui se trouve au moins approximativement parallèle à la partie de l'enveloppe solide du couvercle (11), délimitant latéralement l'ouverture (12) du couvercle, caractérisé en ce que la partie de couvercle (14 ; 14a-f), poussée vers l'arrière à partir de sa position de fermeture, est guidée au niveau de son extrémité arrière contre un arceau de couvercle (16 ; 16') muni d'au moins une coulisse de guidage (26 ; 26') pour guider les éléments de guidage arrière (20 ; 20') des parties de couvercle (14 ; 14a-f), la partie de couvercle (14 ; 14a-f) étant guidée pendant toute la course de coulissement par les éléments de guidage avant (18 ; 18') contre les guides longitudinaux (24 ; 24a) passant sous l'enveloppe rigide (11) du couvercle.

2. Couvercle de véhicule selon la revendication 1, caractérisé en ce que les éléments de guidage sont des tiges de guidage (20 ; 20') latéralement en saillie par rapport à la partie de couvercle (14 ; 14a-f).

3. Couvercle de véhicule selon l'une des revendications 1 ou 2, caractérisé en ce qu'en position de fermeture du couvercle (14), ses éléments de guidage arrière (20) sont également en prise avec le guide longitudinal (24).

4. Couvercle de véhicule selon l'une des revendications précédentes, caractérisé en ce que les éléments de guidage avant (18') et les éléments de guidage arrière (20') sont guidés au moins par segments de guides longitudinaux distincts (24a ; 24b).

5. Couvercle de véhicule selon l'une des revendications précédentes, caractérisé en ce que la coulisse de guidage (26 ; 26') de l'arceau de couvercle (16 ; 16') débouche dans le guide longitudinal (24 ; 24a) à un endroit qui se trouve au niveau ou juste derrière le point où les éléments de guidage arrière de la partie de couvercle la plus arrière (14 ; 14f) sont en position de fermeture du couvercle.

6. Couvercle de véhicule selon l'une des revendications précédentes, caractérisé en ce que l'arceau de couvercle (16 ; 16') comporte au moins au niveau de sa grande longueur, à l'endroit où la ou les parties de couvercle (14 ; 14a-f) sont en position d'ouverture, des parois latérales (28) verticales pour couvrir latéralement les parties de couvercle (14 ; 14a-f) en position d'ouverture.

7. Couvercle de véhicule selon la revendication 6, caractérisé en ce que l'intervalle entre les parois latérales (28) de l'arceau de couvercle (16 ; 16') et les arêtes latérales des parties de couvercle (14 ; 14a-f) est fermé de manière étanche par des joints de bord.
